# EUROPÄISCHE PATENTSCHRIFT

(11) **EP 2 285 724 B1**
(45) Veröffentlichungstag und Bekanntmachung des Hinweises auf die Patenterteilung: **01.08.2012**
(21) Anmeldenummer: 09757282.0
(22) Anmeldetag: 03.06.2009
(51) Int. Cl.: B66F 17/00

(54) **MULTIDIREKTIONAL BEWEGLICHES FAHRZEUG UND VERFAHREN**
MULTI-DIRECTIONALLY MOVABLE VEHICLE AND METHOD
VÉHICULE MOBILE MULTIDIRECTIONNEL ET PROCÉDÉ

(30) Priorität: 06.06.2008 DE 102008002274
(43) Veröffentlichungstag der Anmeldung: 23.02.2011
(73) Patentinhaber: KUKA Laboratories GmbH, 86165 Augsburg (DE)
(72) Erfinder: KURTH, Johannes, 86163 Augsburg (DE); SCHREIBER, Günter, 86316 Friedberg (DE); SELIC, Mario, 86159 Augsburg (DE)
(74) Vertreter: Patentanwälte Funk & Böss GbR
(86) Internationale Anmeldenummer: PCT/EP2009/003967
(87) Internationale Veröffentlichungsnummer: WO 2009/146899

(56) Entgegenhaltungen:
- DE-U1- 20 312 334
- JP-U- 51 127 277

## Beschreibung

Die vorliegende Erfindung bezieht sich auf einen Industrie- oder Serviceroboter und ein Verfahren zum Betreiben eines Industrie- oder Serviceroboter.

Die vorliegende Erfindung bezieht sich auf Fahrzeuge, wie z.B. Roboterfahrzeuge, die multidirektional und insbesondere omnidirektional beweglich sind. Zu diesem Zwecke weisen solche Fahrzeuge omnidirektionale Räder oder so genannte Allseitenräder auf. Ein Beispiel eines solchen omnidirektionalen Rades ist das so genannte Mecanum-Rad, das beispielsweise in der US 3,876,255 beschrieben ist. Ein solches omnidirektionales Rad kann sich in jede Richtung bewegen. Die DE 20 2004 015 422 U1 beschreibt ein omnidirektionales Fahrzeug, welches mit Mecanum-Rädern ausgestattet ist.

Solche omnidirektional beweglichen Fahrzeuge werden z.B. durch eine fahrzeuginterne Steuereinrichtung gesteuert. Die Bewegung dieser omnidirektionalen Plattform, d.h. die Bewegungsrichtung, Bewegungsgeschwindigkeit, Richtungsänderungen und dergleichen, werden hier also programmgesteuert. Solche Plattformen sind damit eigenständig mobil, was allerdings die Gefahr einer Kollision mit Gegenständen und vor allem mit Personen in der Umgebung dieser Plattformen mit sich bringt. Dies ist durch geeignete Maßnahmen möglichst zu verhindern.

Mobile Plattformen für Roboter, wie z.B. fahrerlose Transportsysteme (FTS), weisen optische Anzeigevorrichtungen in Form von sich drehenden Signallampen auf, die im Betrieb dieser mobilen Plattform ein entsprechendes optisches Warnsignal abgeben. Mit diesen sich drehenden Signallampen werden Personen im Umfeld der mobilen Plattform auf deren Bewegung aufmerksam gemacht. Weitergehende Informationen, beispielsweise die Bewegungsrichtung, die Bewegungsgeschwindigkeit, ein beabsichtigter Richtungswechsel, etc. dieser mobilen Plattform können aus dem von der Signallampe abgegebenen optischen Warnsignal nicht entnommen werden.

Problematisch bei solchen omnidirektional beweglichen Plattformen ist allerdings, dass eine Person im Umfeld dieser Plattform die beabsichtigte Bewegungsrichtung dieser omnidirektional beweglichen Plattform nicht vorausahnen kann. Für diese Person kann es daher schwierig sein, sich von dieser Plattform entfernt zu halten, vor allem dann, wenn diese mobile Plattform abrupte Bewegungsänderungen vornimmt.

Dieses Problem ist besonders gravierend unmittelbar vor einem erneuten Anfahren der omnidirektional beweglichen Plattform aus dem Stillstand heraus. Eine Besonderheit solcher omnidirektional beweglicher Plattformen besteht darin, dass diese ihre Bewegungsrichtung auch im Stillstand in jede Richtung beliebig ändern können. Eine in der unmittelbaren Umgebung der omnidirektional beweglichen Plattform befindliche Person weiß daher nie, in welche Richtung sich diese Plattform im nächsten Augenblick bewegen wird. Dies birgt ein erhöhtes Unfallrisiko.

Die DE 203 12 334 U1 offenbart eine Felgenleuchte und die JP 51 127277 U offenbart ein Fahrzeug, das ein mittels eines Druckzylinders schwenkbares Rad aufweist.

Vor diesem Hindergrund besteht eine Aufgabe der vorliegenden Erfindung darin, eine sicherere Möglichkeit zum Betreiben multidirektional beweglicher Fahrzeuge anzugeben.

Die Aufgabe der Erfindung wird gelöst durch einen Industrie- oder Serviceroboter, als ein multidirektional bewegliches Fahrzeug ausgebildet, das einen Fahrzeugkörper, mehrere, drehbar am Fahrzeugkörper angeordnete, omni-direktional bewegliche Räder zur Bewegung des Fahrzeugs, und mehrere Beleuchtungseinrichtungen umfasst, die jeweils einem der Räder zugeordnet sind und die abhängig von der gewählten oder beabsichtigten Fahrtrichtung des Fahrzeugs aktivierbar sind, um durch eine oder mehrere aktivierte Beleuchtungseinrichtungen die Fahrtrichtung des Fahrzeugs nach außen hin optisch anzuzeigen.

Ein weitere Aspekt der Erfindung betrifft ein Verfahren zum Betreiben des erfindungsgemäßen Industrie- oder Serviceroboter, bei dem abhängig von der gewählten und/oder beabsichtigten Bewegungsrichtung des Fahrzeugs zumindest ein und insbesondere zwei Räder mittels einer diesen Rädern jeweils zugeordneten Fahrzeug-zugehörigen Beleuchtungseinrichtung so beleuchtet werden, dass durch dieses optische Signal die gewählte und/oder beabsichtigte Bewegungsrichtung des Fahrzeugs nach außen hin optisch angezeigt wird.

Somit wird gegebenenfalls an einem multidirektional beweglichen Fahrzeug ein Signalsystem installiert, das einer außenstehenden Person Informationen über die geplante Bewegungsrichtung dieses Fahrzeuges optisch anzeigt. Hierfür wird erfindungsgemäß eine steuerbare Beleuchtungsvorrichtung bereitgestellt, die abhängig von der gewählten oder etwa auch einer beabsichtigten Fahrtrichtung des Fahrzeuges ein optisches Signal ausgibt, welches eindeutig der gewählten bzw. beabsichtigten Fahrtrichtung des Fahrzeuges zugeordnet werden kann. Dies geschieht dadurch, dass diese Beleuchtungseinrichtungen den verschiedenen Rädern des Fahrzeuges zugeordnet sind und damit auch ein einem jeweiligen Rad zugeordnetes optisches Informationssignal ausgeben kann. Eine außenstehende Person würde ein solches, einem jeweiligen Rad zugeordnetes optisches Signal dahingehend interpretieren, dass dieses Rad und damit das gesamte Fahrzeug in entsprechende Richtung dieses Rades bewegt werden. Im Falle von beispielsweise zwei verschiedenen Rädern zugeordneten optischen Signalen ließe sich daraus in analoger Weise die Fahrtrichtung des Fahrzeuges in die Richtung dieser beiden Räder ableiten.

Der erfindungsgemäße Roboter kann eine Steuereinrichtung aufweisen, die mit den Beleuchtungseinrichtungen gekoppelt ist und die der Steuerung der Beleuchtungseinrichtungen dient.

Besonders einfach und darüber hinaus auch aus marketingtechnischen Gründen besonders attraktiv lässt sich die Beleuchtungsvorrichtung in einem multidirektional beweglichen Rad des Fahrzeuges, beispielsweise im Bereich dessen Radfelge, integrieren oder darauf aufsetzen. In diesem Falle würde das Rad unmittelbar (quasi von innen) beleuchtet werden und somit dem außenstehenden Betrachter die optischen Richtungsinformationen anzeigen. Alternativ wäre natürlich auch denkbar, die Beleuchtungseinrichtung im Bereich eines gegebenenfalls vorhandenen Kotflügels oder Radkastens des entsprechenden Rades anzuordnen. Alternativ wäre es auch denkbar, die Beleuchtungsvorrichtung derart an der Karosserie zu befestigen, dass damit ein jeweils zugeordnetes Rad bzw. etwa auch der Radkasten beleuchtet wird. Darüber hinaus wären sicherlich auch andere Lösungen denkbar.

Gemäß einer Ausführungsform des erfindungsgemäßen Roboters umfasst dieses vier multidirektional bewegliche Räder und insbesondere vier omnidirektional bewegliche Räder, die jeweils über eine ihr zugeordnete Beleuchtungseinrichtung verfügen.

Die Steuereinrichtung kann neben der Funktion zum Steuern der Beleuchtungseinrichtungen abhängig von der Bewegungsrichtung des Fahrzeugs auch die Funktion zur Steuerung des Antriebs der Räder und/oder die Funktion zur Steuerung der Bewegungsrichtung der Räder und/oder die Funktion zur Steuerung der Bewegungsgeschwindigkeit der Räder und/oder die Funktion zur Steuerung Industrieroboters aufweisen.

Die Ausgabe der optischen Signale und hier insbesondere die Beleuchtung der Räder kann generell beliebig sein, beispielsweise in Form eines Dauerlichts, eines Blinklichts mit konstanter Frequenz oder variierbarer Frequenz, eines unterschiedlich farbigen Lichts und dergleichen. Weiterhin wäre denkbar, dass die steuerbare Beleuchtungseinrichtung unterschiedliche Farben pro Rad verwendet, wobei über die jeweils gewählte Farbe die Fahrtrichtung, die Geschwindigkeit, eine beabsichtigte Richtungsänderung, etc. signalisiert werden kann.

Es kann auch vorgesehen sein, dass die Bewegungsart des multidirektional beweglichen Fahrzeuges über die steuerbare Beleuchtungseinrichtung angezeigt wird. So könnte beispielsweise im Falle einer sich auf der Stelle drehenden Plattform die Blinkfrequenz erhöht (oder auch verringert) werden. Darüber hinaus könnte in diesem Falle auch ein Lauflicht (vergleichbar einer Lichterkette), welches in der Richtung der Umdrehung des multidirektional beweglichen Fahrzeuges verläuft und für welches die Räder oder deren zugeordnete Beleuchtungen verwendet werden, die Bewegungsrichtung angezeigt werden.

Nach einer Variante des erfindungsgemäßen Roboters werden anfänglich zunächst alle Beleuchtungseinrichtungen aktiviert. Die gewählte und/oder die beabsichtigte Fahrtrichtung des Fahrzeugs wird nun über unterschiedliche Lichtfarben, die von den jeweiligen Beleuchtungseinrichtungen ausgestrahlt werden, angezeigt.

Zusätzlich oder alternativ kann es vorgesehen sein, eine Information über die Geschwindigkeit, die beabsichtigte Fahrtrichtung, eine beabsichtigte Richtungsänderung z.B. durch die Veränderung der Intensität der steuerbaren Beleuchtungseinrichtung anzuzeigen. Insbesondere wäre besonders bevorzugt, wenn hier die Geschwindigkeit über die Intensität der Beleuchtungseinrichtung angezeigt wird, indem z. B. eine höhere Intensität auf eine größere Geschwindigkeit des Fahrzeugs schließen lässt.

Es ist auch möglich, wenn die steuerbaren Beleuchtungseinrichtungen zeitversetzt aktiviert werden, z.B. bevor sich der Roboter in Bewegung setzt, umso einem Außenstehenden bereits vor Beginn einer erneuten Fahrt des Fahrzeuges, d.h. noch in Stillstand des Fahrzeuges, den bevorstehenden Fahrtbeginn optisch anzuzeigen. Dieses zeitversetzte Aktivieren oder Ändern des Zustands der Beleuchtungseinrichtung kann auch verwendet werden, um eine Geschwindigkeitsänderung, eine beabsichtigte Fahrtrichtungsänderung und dergleichen bereits vorher anzuzeigen.

Ausführungsbeispiele der Erfindung sind exemplarisch in den beigefügten schematischen Figuren der Zeichnung dargestellt. Dabei zeigen:
- Fig. 1A: eine perspektivische Darstellung eines ersten, allgemeinen Ausführungsbeispiels des erfindungsgemäßen multidirektional beweglichen Fahrzeugs,
- Fig. 1B: eine Draufsicht auf das Fahrzeug aus Fig. 1A,

- Fig. 2: eine schematische Darstellung eines erfindungsgemäßen Fahrzeugs zur Erläuterung verschiedener Betriebsmodi und
- Fig. 3: eine perspektivische Darstellung eines zweiten, bevorzugten Ausführungsbeispiels eines erfindungsgemäßen multidirektional beweglichen Fahrzeugs.

In den Figuren der Zeichnung sind gleiche und funktionsgleiche Elemente und Merkmale - sofern nichts Anderes ausgeführt ist - mit denselben Bezugszeichen versehen.

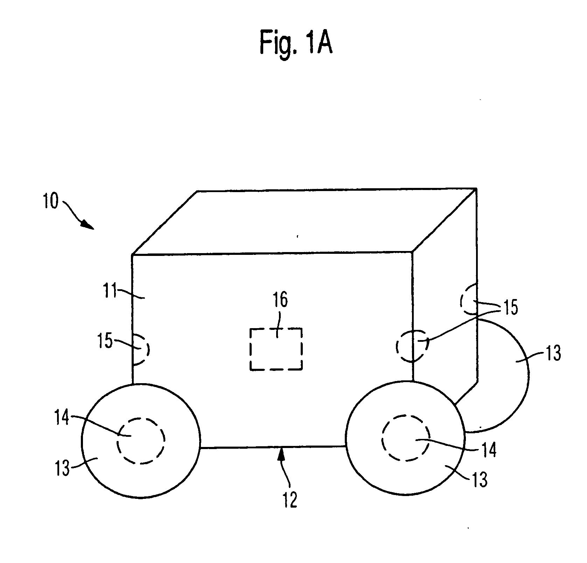

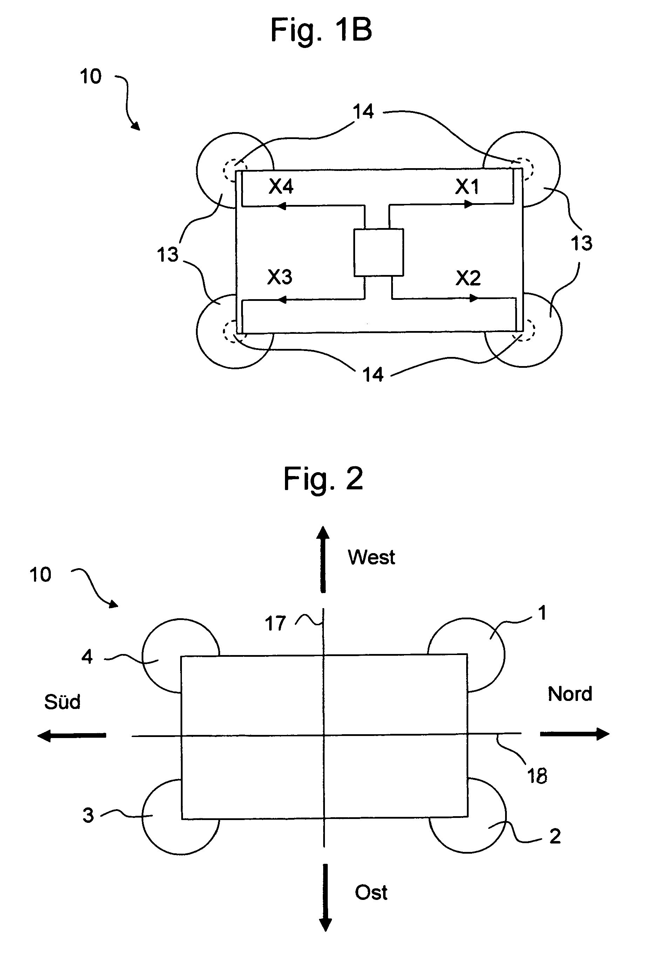

Fig. 1A zeigt eine perspektivische Darstellung und Fig. 1B zeigt eine Draufsicht auf ein fahrerloses Transportsystem (FTS) zur Erläuterung eines ersten, allgemeinen Ausführungsbeispiels eines erfindungsgemäßen Fahrzeuges. Das Fahrzeug ist hier als omnidirektionales Fahrzeug ausgebildet, welches sich also horizontal in alle Richtungen bewegen lässt. Das mit Bezugszeichen 10 bezeichnete Fahrzeug weist einen Fahrzeugkörper 11, 12 auf, der eine Fahrzeugkarosserie 11 sowie eine daran befestigte Plattform 12 enthält. Das Fahrzeug 10 weist ferner vier Räder 13 auf. Diese Räder 13 sind in an sich bekannter Weise an der Plattform 12 des Fahrzeuges 10 befestigt. Die Räder 13 sind hier im Wesentlichen an den jeweiligen vier Ecken des Fahrzeugs 10 angebracht.

Das Fahrzeug weist ferner verschiedene Beleuchtungseinrichtungen 14 auf. Diese Beleuchtungseinrichtungen 14 sind hier Bestandteil eines jeweiligen Rades 13, wobei diese auf das Rad 13 aufgesetzt werden können oder im Rad integriert sein können. Besonders bevorzugt ist es, wenn eine jeweilige Beleuchtungseinrichtung 14 in dem ihm zugeordneten Rad 13 integriert ist, d. h. im Inneren des jeweiligen Rades 13 angeordnet ist. In diesem Falle ist es notwendig, dass das jeweilige Rad 13 zumindest teilweise transparent ausgebildet ist, damit die von der diesem Rad 13 zugeordneten Beleuchtungseinrichtung 14 ausgesendete Licht auch nach außen strahlen kann.

Zusätzlich oder alternativ wäre auch denkbar, wenn eine Beleuchtungseinrichtung an der Karosserie 11 in der unmittelbaren Nähe eines ihm zugeordneten Rades 13 angeordnet ist. Eine solche Beleuchtungseinrichtung ist in dem Ausführungsbeispiel in der Fig. 1A mit Bezugszeichen 15 bezeichnet. Diese Beleuchtungseinrichtung 15 kann dazu ausgelegt sein, Licht nach außen (also vom Fahrzeug 10 weg) zu strahlen. Zusätzlich oder alternativ wäre es auch denkbar, dass diese Beleuchtungseinrichtung 15 das jeweils ihr zugeordnete Rad 13 anstrahlt und damit beleuchtet.

Als Beleuchtungseinrichtungen 14, 15 können herkömmliche Lichtquellen wie z. B. Halogenleuchten, Gasentladungslampen, Neonleuchten, Leuchtdioden, Leuchtdiodenanordnungen und dergleichen verwendet werden.

Das Fahrzeug 10 weist ferner eine Steuereinrichtung 16 auf, die dazu ausgelegt ist, die Beleuchtungseinrichtungen 14, 15 zu steuern. Dies bedeutet, dass über die Steuereinrichtung 16 entsprechende Steuersignale X1 bis X4 erzeugbar sind, über welche die Beleuchtungseinrichtungen 14, 15 entsprechend ansteuerbar sind. Abhängig von der Ansteuerung und der Art und Weise der Ausbildung dieser Beleuchtungseinrichtungen 14, 15 werden diese Beleuchtungseinrichtungen 14, 15 aktiviert. Dabei kann je nach Auslegung vorgesehen sein, dass diese Beleuchtungseinrichtungen 14, 15 lediglich ein- oder ausgeschaltet werden und damit Licht ausstrahlen oder nicht. Zusätzlich kann auch vorgesehen sein, dass diese Beleuchtungseinrichtungen ein Blinklicht mit gleichbleibender oder variierender Frequenz erzeugen. Zusätzlich oder alternativ kann auch vorgesehen sein, dass diese Beleuchtungseinrichtungen abhängig von der Ansteuerung ein unterschiedlich farbiges Licht ausstrahlen. Diese Frequenz kann einem Außenstehenden auch eine Information über die Fahrtrichtung geben.

Es sei angenommen, dass diese Räder 13 als Mecanum-Räder als Beispiel für omnidirektionale Räder ausgebildet sind. Ein solches Mecanum-Rad weist z. B. zwei starr miteinander verbundene Radscheiben auf, zwischen denen mehrere Rollkörper bezüglich ihrer Längsachsen drehbar gelagert sind. Diese beiden Radscheiben können bezüglich einer Drehachse drehbar gelagert sein und mittels eines Antriebs derart angetrieben werden, dass sich die beiden Radscheiben bezüglich deren Drehachse drehen. Der Aufbau und die Funktionsweise eines Mecanum-Rades ist z. B. in der US 3,876,255 beschrieben und die Anbringung eines solchen Mecanum-Rades an einem Fahrzeug ist in der DE 20 2004 015 422 U1 beschrieben. Diese beiden Druckschriften werden hinsichtlich des Aufbaus des Mecanum-Rades und dessen Montage an einem Fahrzeug vollinhaltlich mit in die vorliegende Patentanmeldung mit einbezogen.

Fig. 2 zeigt eine schematische Darstellung des erfindungsgemäßen, multidirektional beweglichen Fahrzeugs aus den Fig. 1A, 1B zur Erläuterung verschiedener Betriebsmodi.

In der Fig. 2 sind mit 1 bis 4 die verschiedenen Positionen der Räder 13 am Fahrzeug 10 bezeichnet.

Das Fahrzeug 10 ist über die omnidirektional bewegliche Räder 13 in sämtlichen vier Himmelsrichtungen (West, Nord, Ost, Süd) beweglich, wie in der Fig. 2 durch die Pfeile angedeutet wurde. Es sei nun angenommen, dass jedes dieser Räder 13 über eine jeweils in oder an dem Rad 13 vorgesehene Beleuchtungseinrichtung 14 verfügt. Diese Räder 13 werden über die hier nicht gezeigte Steuereinrichtung 16 entsprechend der in der nachfolgenden Tabelle 1 dargestellten Weise abhängig von der vorgenommenen oder auch geplanten Fahrtrichtung betrieben:

**Tabelle 1**

| **Fahrtrichtung** | **Beleuchtete Räder** |
|---|---|
| Nord | 1 und 2 |
| Ost | 2 und 3 |
| Süd | 3 und 4 |
| West | 4 und 1 |
| | |
| Nord-West (diagonal) | 1 |
| Nord-Ost (diagonal) | 2 |
| Süd-Ost (diagonal) | 3 |
| Süd-West (diagonal) | 4 |
| | |
| Drehen auf der Stelle von Nord über Ost und Süd nach West | 1 - 2 - 3 - 4... (als Lauflicht) |
| Drehen auf der Stelle von Nord über West und Süd nach Ost | 1 - 4 - 3 - 2... (als Lauflicht) |

Für eine geplante Fahrtrichtung "Nord" werden somit die Räder 1 und 2, für eine Fahrtrichtung "Ost" werden die Räder 2 und 3, für eine Fahrtrichtung "Süd" werden die Räder 3 und 4 und für eine Fahrtrichtung "West" werden die Räder 1 und 4 beleuchtet.

Damit werden jeweils zwei benachbarte Räder 13 dann angesteuert, wenn das Fahrzeug 10 sich entlang einer seiner Fahrzeugachsen 17, 18 bewegt, wobei in diesem Falle diejenigen Räder 13 beleuchtet werden, die in der Richtung des Fahrzeuges 10 bezogen auf eine seiner Fahrzeugachsen 17, 18 liegen.

Einem Außenstehenden wird damit signalisiert, dass sich das Fahrzeug 10 in der Richtung der den beleuchteten Rädern 13 jeweils zugeordneten Fahrzeugachse 17, 18 bewegt.

Darüber hinaus wäre natürlich auch eine Bewegung des Fahrzeuges 10 quer zu einer dieser Fahrzeugachsen 17, 18, beispielsweise diagonal, denkbar. Im Falle einer solchen diagonalen Bewegung würde zweckmäßiger Weise lediglich ein einziges dieser Räder 13 über dessen Beleuchtungseinrichtung 14 beleuchtet werden. Beispielsweise würde im Falle einer diagonalen Bewegung in Richtung Nord-West das Rad 1, einer Bewegung in Richtung Nord-Ost das Rad 2, einer Bewegung in Richtung Süd-Ost das Rad 3 und einer Bewegung in Richtung Süd-West das Rad 4 beleuchtet werden.

Einem Außenstehenden wird damit signalisiert, dass das Fahrzeug 10 sich in die Richtung des jeweils beleuchteten Rades 13 bewegt.

Neben diesen eben genannten linearen Bewegungen in Richtung einer Fahrzeugachse 17, 18 eines Fahrzeuges 10 bzw. einer dazu diagonalen Bewegung wäre es auch möglich, dass das Fahrzeug 10 sich auf der Stelle im oder gegen den Uhrzeigersinn (bezogen auf die Draufsicht des Fahrzeuges 10) dreht. Im Falle einer Drehung des Fahrzeuges 10 im Uhrzeigersinn, d. h. bei einer Drehung von Nord über Ost nach Süd könnten die einzelnen Beleuchtungseinrichtungen 14 der verschiedenen Räder 13 derart angesteuert werden, dass diese gewissermaßen ein Lauflicht (vergleichbar einer Lichterkette) bilden, wobei die Beleuchtungseinrichtungen 14 bzw. die ihnen zugeordneten Räder 13 dann jeweils im Uhrzeigersinn nacheinander beleuchtet werden. In diesem Falle würden nacheinander die Räder 1 - 2 - 3 - 4 - 1 - etc. beleuchtet werden. Einem Außenstehenden würde dann signalisiert werden, dass sich das Fahrzeug 10 auf der Stelle in der Richtung des Uhrzeigersinns bewegt. Im umgekehrten Falle, d. h. wenn das Fahrzeug 10 sich entgegen des Uhrzeigersinnes bewegt, könnten die Beleuchtungseinrichtungen 14 bzw. die ihnen zugeordneten Räder 13 in der umgekehrten Reihenfolge als Lauflicht beleuchtet werden.

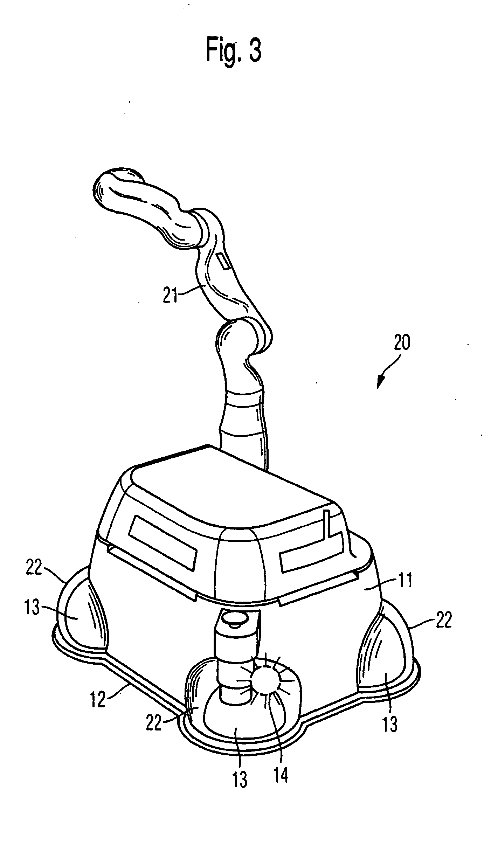

Fig. 3 zeigt eine perspektivische Darstellung eines zweiten, besonders bevorzugten Ausführungsbeispiels eines erfindungsgemäßen multidirektional beweglichen Fahrzeugs. Im Unterschied zu dem Ausführungsbeispiel in den Fig. 1A, 1B ist hier das Fahrzeug als omnidirektional beweglicher Industrieroboter ausgebildet. Dieser Industrieroboter 20 ist im Wesentlichen analog zu dem Fahrzeug 10 aus den Fig. 1A, 1B ausgebildet. Zusätzlich ist hier an der Karosserie 11 ein Roboterarm 21 befestigt, dessen Aufbau und Funktionsweise hier allerdings nicht näher ausgeführt wird.

Im Unterschied zu dem Ausführungsbeispiel in der Fig. 1A sind hier ferner die einzelnen Räder 14 jeweils in einem Radkasten angeordnet, der jeweils das diesen Radkasten zugeordnete Rad 13 nach außen hin vollständig umgibt. Dieser Radkasten 22 ist nach außen hin als zumindest teilweise lichtdurchlässige Plexiglasscheibe 22 ausgebildet. Im Inneren des Radkastens 22 ist ferner die dem jeweiligen Rad 13 zugeordnete Beleuchtungseinrichtung 14 vorgesehen. Wird diese Beleuchtungseinrichtung 14 über die hier nicht näher dargestellte Steuereinrichtung 16 aktiviert, dann beleuchtet diese Beleuchtungseinrichtung 14 das zugeordnete Rad 13, was dann nach außen hin sichtbar ist.

## Patentansprüche

1. Industrie- oder Serviceroboter als ein multidirektional bewegliches Fahrzeug (10, 20) ausgebildet, das einen Fahrzeugkörper (11, 12), mehrere, drehbar am Fahrzeugkörper (11, 12) angeordnete, omni-direktional bewegliche Räder (13) zur Bewegung des Fahrzeugs (10), und mehrere Beleuchtungseinrichtungen (14, 15) umfasst, die jeweils einem der Räder (13) zugeordnet sind und die abhängig von der gewählten oder beabsichtigten Fahrtrichtung des Fahrzeugs (10) aktivierbar sind, um durch eine oder mehrere aktivierte Beleuchtungseinrichtungen (14, 15) die Fahrtrichtung des Fahrzeugs (10) nach außen hin optisch anzuzeigen.

2. Roboter nach Anspruch 1, aufweisend eine Steuereinrichtung (16), die mit den Beleuchtungseinrichtungen (14, 15) gekoppelt ist und die der Steuerung der jeweiligen Beleuchtungseinrichtungen (14, 15) dient.

3. Roboter nach einem der Ansprüche 1 oder 2, dessen Beleuchtungseinrichtungen (14, 15) dazu ausgelegt sind, ein einer Beleuchtungseinrichtungen (14, 15) jeweils zugeordnetes Rad (13) zu beleuchten.

4. Roboter nach einem der Ansprüche 1 bis 3, bei dem zumindest eine Beleuchtungseinrichtung (14) in oder auf einem zugeordneten Rad angeordnet ist.

5. Roboter nach Anspruch 4, wobei die Räder (13) und die diesen jeweils zugeordneten Beleuchtungseinrichtungen (14) in einer Radkastenvorrichtung des Fahrzeugs vorgesehen sind, welche das jeweils zugeordnete Rad (13) sowie die diesem jeweils zugeordnete Beleuchtungseinrichtung (14) umschließt, wobei die Radkastenvorrichtung nach außen hin, beispielsweise über eine Plexiglasscheibe (22), zumindest teilweise und/oder zumindest abschnittsweise transparent ausgebildet ist.

6. Roboter nach einem der Ansprüche 1 bis 5, welches vier multidirektional bewegliche Räder (13) und insbesondere vier omnidirektional bewegliche Räder (13) aufweist, die jeweils über eine ihr zugeordnete Beleuchtungseinrichtung (14, 15) verfügen.

7. Roboter nach einem der Ansprüche 2 bis 6, bei dem die Steuereinrichtung (16) neben der Funktion zum Steuern der Beleuchtungseinrichtungen (14, 15) abhängig von der Bewegungsrichtung des Fahrzeugs (10) auch die Funktion zur Steuerung des Antriebs der Räder (13) und/oder die Funktion zur Steuerung der Bewegungsrichtung der Räder (13) und/oder die Funktion zur Steuerung der Bewegungsgeschwindigkeit der Räder (13) und/oder die Funktion zur Steuerung Industrieroboters (20) aufweist.

8. Verfahren zum Betreiben eines Roboters gemäß einem der Ansprüche 1 bis 7, bei dem abhängig von der gewählten und/oder beabsichtigten Bewegungsrichtung des Fahrzeugs (10) zumindest ein und insbesondere zwei Räder (13) mittels einer diesen Rädern (13) jeweils zugeordneten Fahrzeug-zugehörigen Beleuchtungseinrichtung (14, 15) so beleuchtet wird bzw. werden, dass durch dieses optische Signal die gewählte und/oder beabsichtigte Bewegungsrichtung des Fahrzeugs (10) nach außen hin optisch angezeigt wird.

9. Verfahren nach Anspruch 8, wobei die Ausgabe der optischen Signale in Form eines Dauerlichts und/oder in Form eines Blinklichts mit konstanter Frequenz und/oder in Form eines Blinklichts mit variierbarer Frequenz und/oder in Form eines unterschiedlich farbigen Lichts erfolgt.

10. Verfahren nach einem der Ansprüche 8 oder 9, wobei für die Ausgabe der optischen Signale unterschiedliche Farben pro Rad (13) verwendet werden.

11. Verfahren nach Anspruch 10, bei dem durch die jeweils verwendete Farbe der einem Rad (13) zugeordneten optischen Signale die Fahrtrichtung und/oder die Geschwindigkeit und/oder eine beabsichtigte Richtungsänderung signalisiert wird.

12. Verfahren nach einem der Ansprüche 8 bis 11, bei dem ein sich auf der Stelle drehendes Fahrzeug (10) dadurch angezeigt wird, dass die Beleuchtungseinrichtungen (14, 15) in Form eines Lauflichts in oder entgegen dem Uhrzeigersinn aktiviert werden.

13. Verfahren nach einem der Ansprüche 8 bis 12, bei dem alle Beleuchtungseinrichtungen (14, 15) aktiviert werden, wobei die gewählte und/oder die beabsichtigte Fahrtrichtung des Fahrzeugs (10) über unterschiedliche Lichtfarben, die von den jeweiligen Beleuchtungseinrichtungen (14, 15) ausgestrahlt werden, angezeigt wird.

14. Verfahren nach einem der Ansprüche 8 bis 13, bei dem durch eine Veränderung der Intensität der ausgegebenen optischen Signale die Fahrtrichtung und/oder die Geschwindigkeit und/oder eine beabsichtigte Richtungsänderung signalisiert wird.

15. Verfahren nach einem der Ansprüche 8 bis 14, bei dem die Beleuchtungseinrichtungen (14, 15) zeitversetzt vor einer beabsichtigten Fahrtrichtungsänderung und/oder Geschwindigkeitsänderung und/oder Bewegungsaufnahme aktiviert wird.

## Claims

1. Industrial or service robot designed as a multidirectional movable vehicle (10, 20), which comprises a vehicle body (11, 12), several omnidirectional movable wheels (13) arranged rotatably on the vehicle body (11, 12) for moving the vehicle (10) and several lighting devices (14, 15), which are assigned respectively to one of the wheels (13) and which can be activated as a function of the selected or intended direction of travel of the vehicle (10), in order by means of one or more activated lighting devices (14, 15) to display optically on the outside the direction of travel of the vehicle (10).

2. Robot according to claim 1, comprising a control device (16) which is coupled to the lighting devices (14, 15) and which is used for controlling the respective lighting devices (14, 15).

3. Robot according to either of claims 1 or 2, the lighting devices (14, 15) of which are configured to illuminate a wheel (13) assigned to one of the lighting devices (14, 15) respectively.

4. Robot according to any one of claims 1 to 3, in which at least one lighting device (14) is arranged in or on an assigned wheel.

5. Robot according to claim 4, wherein the wheels (13) and the lighting devices (14) assigned to the latter respectively are provided in a wheel box device of the vehicle, which surrounds the respectively assigned wheel (13) and the lighting device (14) assigned thereto respectively, wherein the wheel box device is designed on the outside, for example by a Plexiglas disc (22), to be at least partly transparent and/or at least transparent in some sections.

6. Robot according to any one of claims 1 to 5, which comprises four multidirectional movable wheels (13) and in particular four omnidirectional movable wheels (13) which respectively have a lighting device (14, 15) assigned thereto.

7. Robot according to any one of claims 2 to 6, in which the control device (16) in addition to the function of controlling the lighting devices (14, 15) depending on the direction of movement of the vehicle (10) also has the function of controlling the drive of the wheels (13) and/or the function of controlling the direction of movement of the wheels (13) and/or the function of controlling the speed of movement of the wheels (13) and/or the function of controlling the industrial robot (20).

8. Method for operating a robot according to any one of claims 1 to 7, in which, depending on the selected and/or intended direction of movement of the vehicle (10), at least one and in particular two wheels (13) is or are illuminated by means of a vehicle-assigned lighting device (14, 15) allocated to said wheels, so that by means of said optical signal the selected and/or intended direction of the movement of the vehicle (10) is displayed optically on the outside.

9. Method according to claim 8, wherein the output of the optical signals is in the form of a continuous light and/or in the form of a flashing light with a constant frequency and/or in the form of a flashing light with variable frequency and/or in the form of a different coloured light.

10. Method according to either of claims 8 or 9, wherein for the output of optical signals different colours are used for each wheel (13).

11. Method according to claim 10, in which by means of the respectively used colour of the optical signals assigned to a wheel (13) the direction of travel and/or the speed and/or an intended change in direction is signalled.

12. Method according to any one of claims 8 to 11, in which a vehicle (10) rotating on the spot is displayed in that the lighting devices (14, 15) are activated in the form of a running light in clockwise or anticlockwise direction.

13. Method according to any one of claims 8 to 12, in which all of the lighting devices (14, 15) are activated, wherein the selected and/or the intended direction of travel of the vehicle (10) is displayed by different coloured lights, which are emitted by the respective lighting devices (14, 15).

14. Method according to any one of claims 8 to 13, in which by changing the intensity of the emitted optical signals the direction of travel and/or the speed and/or an intended change in direction is signalled.

15. Method according to any one of claims 8 to 14, in which the lighting devices (14, 15) are activated with a time delay before an intended change in the direction of travel and/or change in speed and/or movement capability.

## Revendications

1. Robot industriel et de service réalisé sous forme de véhicule (10, 20) à mobilité multidirectionnelle qui comprend un corps de véhicule (11, 12), plusieurs roues (13) agencées rotatives sur le corps de véhicule (11, 12) et à mobilité omnidirectionnelle pour déplacer le véhicule (10), et plusieurs dispositifs d'éclairage (14, 15) qui sont chacun associés à une des roues (13) et qui peuvent être activés en fonction de la direction choisie ou envisagée du véhicule (10) pour signaler optiquement vers l'extérieur la direction de roulement du véhicule (10) au moyen d'un ou de plusieurs dispositifs d'éclairage (14, 15).

2. Robot selon la revendication 1, présentant un dispositif de commande (16) qui est accouplé aux dispositifs d'éclairage (14, 15) et qui sert à la commande des dispositifs d'éclairage (14, 15) respectifs.

3. Robot selon l'une des revendications 1 ou 2, dont les dispositifs d'éclairage (14, 15) sont conçus pour éclairer une roue (13) respectivement associée à un dispositif d'éclairage (14, 15).

4. Robot selon l'une des revendications 1 à 3, dans lequel au moins un dispositif d'éclairage (14, 15) est agencé dans ou sur une roue associée.

5. Robot selon la revendication 4, dans lequel les roues (13) et les dispositifs d'éclairage (14) respectivement associés à celles-ci sont prévus dans un dispositif de passage de roue du véhicule qui entoure la roue (13) respectivement associée ainsi que le dispositif d'éclairage (14) respectivement associé a celle-ci, le dispositif de passage de roue étant réalisé transparent vers l'extérieur, au moins partiellement et/ou au moins par tronçon, par exemple par l'intermédiaire d'une plaque de plexiglas (22).

6. Robot selon l'une des revendications 1 à 5, qui présente quatre roues (13) à mobilité multidirectionnelle et en particulier quatre roues (13) à mobilité omnidirectionnelle qui disposent chacune d'un dispositif d'éclairage (14, 15) associé à celles-ci.

7. Robot selon l'une des revendications 2 à 6, dans lequel le dispositif de commande (16), en plus de la fonction de commande des dispositifs d'éclairage (14, 15) en fonction de la direction de mouvement du véhicule (10), présente aussi la fonction de commande de l'entraînement des roues (13) et/ou la fonction de commande de la direction de mouvement des roues (13) et/ou la fonction de commande de la vitesse de mouvement des roues (13) et/ou la fonction de commande du robot industriel (20).

8. Procédé pour faire fonctionner un robot selon l'une des revendications 1 à 7, dans lequel, en fonction de la direction de mouvement choisie et/ou envisagée du véhicule (10), au moins une et en particulier deux roues (13) est/sont éclairée(s) au moyen d'un dispositif d'éclairage (14, 15) associé à ces roues (13) respectives, de telle sorte que par ce signal optique, la direction de mouvement choisie et/ou envisagée du véhicule (10) est signalée optiquement vers l'extérieur.

9. Procédé selon la revendication 8, dans lequel l'émission de signaux optiques a lieu sous la forme d'un allumage ininterrompu et/ou sous la forme d'un clignotant avec fréquence constante et/ou sous la forme d'un clignotant avec fréquence variable et/ou sous la forme d'une lumière de différente couleur.

10. Procédé selon l'une des revendications 8 ou 9, dans lequel on utilise différentes couleurs pour chaque roue (13), pour l'émission des signaux optiques.

11. Procédé selon la revendication 10, dans lequel la direction de roulement et/ou la vitesse et/ou un changement de direction envisagé est signalé par la couleur respectivement utilisée des signaux optiques associés à une roue (13).

12. Procédé selon l'une des revendications 8 à 11, dans lequel un véhicule (10) qui tourne sur place est signalé de telle sorte que les dispositifs d'éclairage (14, 15) sont activés sous forme d'une lumière courante dans le sens des aiguilles d'une montre ou dans le sens inverse.

13. Procédé selon l'une des revendications 8 à 12, dans lequel tous les dispositifs d'éclairage (14, 15) sont activés, la direction de roulement choisie et/ou envisagée du véhicule (0) étant signalée par l'intermédiaire de différentes couleurs de feux qui sont diffusées par les dispositifs d'éclairage (14, 15) respectifs.

14. Procédé selon l'une des revendications 8 à 13, dans lequel la direction de roulement et/ou la vitesse et/ou un changement de direction envisagé est signalisé(e) par un changement de l'intensité des signaux optiques émis.

15. Procédé selon l'une des revendications 8 à 14, dans lequel les dispositifs d'éclairage (14, 15) sont activés avec décalage de temps avant un changement de direction de roulement envisagé et/ou un changement de vitesse envisagé et/ou une mise en mouvement envisagée.
